# EUROPÄISCHE PATENTSCHRIFT

(11) **EP 3 514 274 B1**
(45) Veröffentlichungstag und Bekanntmachung des Hinweises auf die Patenterteilung: **14.05.2025**
(21) Anmeldenummer: 19150704.5
(22) Anmeldetag: 08.01.2019
(51) Int. Cl.: D01G 19/26

(54) **GETRIEBE MIT EINER EINSTELLVORRICHTUNG FÜR EINE KÄMMMASCHINE**
GEAR UNIT WITH AN ADJUSTING MECHANISM FOR A COMBER
ENGRENAGE DOTÉ D'UN DISPOSITIF DE RÉGLAGE POUR UNE MACHINE DE PEIGNAGE

(30) Priorität: 23.01.2018 CH 722018
(43) Veröffentlichungstag der Anmeldung: 24.07.2019
(73) Patentinhaber: Rieter AG, 8406 Winterthur (CH)
(72) Erfinder: WEBER, Heribert, 9320 Arbon (CH)

(56) Entgegenhaltungen:
- DE-A1- 1 685 575
- FR-A- 593 903
- GB-A- 140 606

## Beschreibung

Die vorliegende Erfindung betrifft ein Getriebe für eine Pilgerschrittbewegung von Abreisswalzen einer Kämmmaschine, mit einem Gehäuse, einer Abreisswalzen-Kurvenscheibe und einer Abreisswalzen-Hilfswelle.

Bei einer Kämmmaschine mit einer Vielzahl von Kämmstellen werden jedem Zangenaggregat, welches eine untere Zangenplatte und eine daran drehbar gelagerte Oberzange aufweist, von einem Wattewickel jeweils ein Faserband einem unterhalb des Zangenaggregates angeordneten Rundkamm zur Auskämmung vorgelegt. Während eines Kämmspiels bewegt sich das Zangenaggregat von einer hinteren offenen Stellung in eine vordere geschlossene Stellung, während dieser Hin- und Herbewegung des Zangenaggregates öffnet und schliesst sich die Oberzange, wobei im geschlossenen Zustand des Zangenaggregates die untere Zangenplatte mit der Oberzange einen Klemmpunkt ausbildet und dabei einen heraushängenden Faserbart einem Kämmsegment des Rundkamms vorlegt. Nach Auskämmung mit dem Rundkamm öffnet sich das Zangenaggregat, in dem sich die Oberzange von der unteren Zangenplatte abhebt und der ausgekämmte Faserbart wird über einen im Zangenaggregat drehbar gelagerten Speisezylinder einem nachgeschalteten Abreisswalzenpaar zur Verlötung der ausgekämmten Faserbänder zugeführt. Die an den einzelnen Kämmstellen gebildeten ausgekämmten Faserbänder werden dann auf einem Fördertisch nebeneinander zu einem nachfolgenden Streckwerk überführt, in welchem sie verstreckt werden und anschliessend zu einem gemeinsamen Kämmmaschinenband zusammengefasst werden. Das beim Streckwerk erzeugte Faserband wird danach über ein Trichterrad in eine Kanne abgelegt.

Der Lötvorgang an den Abreisswalzen ist von der Stellung des Zangenaggregates und der Position der Abreisswalzen abhängig. Während des Lötvorgangs bewegt sich die Abreisswalze, wie aus der GB 04425 A bekannt, zuerst in Richtung des Zangenaggregates und dann in entgegengesetzter Richtung, um ein bereits ausgekämmtes und von den Abreisswalzen eingeklemmtes Faserende mit einem vom Rundkamm ausgekämmten Faserende zu verlöten. Jener Abstand, der nicht dachziegelartig aufgelegt und ver lötet ist, wird als Lötabstand bezeichent und kann durch die Bewegung der Abreisswalzen definiert werden.

Das Verlöten der Faserpakete zum gewünschten Faserband hat insbesondere die Anforderung, dass die dachziegelartig aufeinander gelegten Faserpakete ein gleichmässiges Ergebnis aufweisen. Diese Gleichmässigkeit des Faserbandes wird in der Praxis durch die kapazitive Messung am Band ermittelt, wobei die Schichtung der einzelnen Faserpäckchen gemessen wird. Ein Nachteil für die Garnqualität ist das Umlegen der Faserspitzen durch Einstellung einer Steuerscheibe an einer bekannten Kämmmaschine. Dies hat jedoch zur Folge, dass messtechnisch zwar tiefe Ungleichmässigkeiten (CV-Wert) im Band gemessen werden, jedoch mit diesem Ergebnis eine Garnqualität vorliegt, die für die Weiterverarbeitung nicht zu empfehlen ist.

Eine weitere Anforderung an das Faservlies ist die Masseverteilung im Faservlies und die Schnittigkeit. Es sollte beim Löten der Faserpakete darauf geachtet werden, dass geringe Masseschwankungen im Faservlies vorliegen, da dies die Gleichmässigkeit beträchtlich beeinflussen würde.

Aufgabe der vorliegenden Erfindung ist es somit, ein Getriebe für eine Pilgerschrittbewegung von Abreisswalzen einer Kämmmaschine zu schaffen, die es ermöglicht, die Gleichmässigkeit des Faserbandes hinsichtlich des Lötvorgangs derart zu optimieren, so dass die Garnqualität für eine breite Auswahl an vorgelegten Fasermassen eingehalten wird.

Die Aufgabe wird gelöst durch eine Antriebsvorrichtung für Abreisswalzen einer Kämmmaschine mit den Merkmalen des unabhängigen Patentanspruchs 1.

Vorgeschlagen wird ein Getriebe für eine Pilgerschrittbewegung von Abreisswalzen einer Kämmmaschine, mit einem Gehäuse, einer Abreisswalzen-Kurvenscheibe und einer Abreisswalzen-Hilfswelle.

Erfindungsgemäss ist eine Einstellvorrichtung zur Verstellung der Abreisswalzen-Kurvenscheibe gegenüber der Abreisswalzen-Hilfswelle vorgesehen, wobei die Einstellvorrichtung eine Hülse aufweist, welche auf der Abreisswalzen-Hilfswelle drehfest angebracht und mit der Abreisswalzen-Hilfswelle lösbar verbunden ist, wobei die Hülse mit der Abreisswalzen-Kurvenscheibe über eine Schleppmitnahme verbunden ist. Diese Einstellvorrichtung ermöglicht eine sehr einfache und kostengünstige technische Lösung zum phasenverschieben der Abreisswalzen-Bewegung. Auf diese Weise kann der Lötprozess und die Masseverteilung im Faservlies optimal auf unterschiedliche Faserlängen eingestellt werden.

Bevorzugt ist die Einstellvorrichtung ausserhalb des Gehäuses angeordnet. Auf diese Art und Weise ist der Zugriff auf die Abreisswalzen-Hilfswelle sehr einfach von aussen möglich.

Weiter bevorzugt ist für die Schleppmitnahme ein der Abreisswalzen-Kurvenscheibe zugewandtes Ende der Hülse als ringförmiger Absatz ausgebildet ist, worin radial aussen eine Anzahl Aufnahmen eingebracht sind, die mit in der Abreisswalzen-Kurvenscheibe eingesetzten Zapfen zusammenwirken.

Überdies ist bevorzugt, dass die Hülse über Schraubverbindungen mit der Abreisswalzen-Kurvenscheibe verbunden ist.

Bevorzugt ist die Abreisswalzen-Kurvenscheibe mit der Abreisswalzen-Hilfswelle über ein Federelement gekoppelt, wobei eine Klemmwirkung entsteht, wenn die Hülse an der Abreisswalzen-Hilfswelle befestigt ist, indem ein an der Hülse vorstehender Dorn das in der Abreisswalzen-Kurvenscheibe eingesetzte Federelement derart in eine Querstellung verlagert, so dass über das Federelement die Kurvenscheibe gegen die Abreisswalzen-Hilfswelle drückt.

Weiter bevorzugt ist die Hülse über Schraubverbindungen mit der Abreisswalzen-Hilfswelle verbunden.

Besonders bevorzugt weist ein der Abreisswalzen-Kurvenscheibe abgewandtes Ende der Hülse sacklochartige Löcher zur Montage der Hülse an der Abreisswalzen-Hilfswelle über Schraubverbindungen auf.

Überdies ist bevorzugt, dass am der Abreisswalzen-Kurvenscheibe abgewandten Ende der Hülse eine ringförmige Aufnahme ausgebildet ist, an der eine Verstellscheibe lösbar angeordnet ist zur Verdeckung der Schraubverbindungen im montierten Zustand und die Verstellscheibe am Umfang einen Zeiger aufweist zur Anzeige einer Position der Abreisswalzen-Kurvenscheibe gegenüber der Abreisswalzen-Hilfswelle mittels einer am Gehäuse angebrachten Skala.

Besonders bevorzugt ist ein Sensor am Gehäuse zur Überwachung der Anwesenheit der Verstellscheibe auf der Hülse vorgesehen. Da der Sensor mit einer Steuereinheit der Kämmmaschine verbunden ist, kann diese dem Benutzer über eine Anzeige an der Kämmmaschine angezeigt werden, ob die Einstellung vorgenommen wurde und ob die Verstellscheibe auf der Hülse angebracht ist.

Ganz besonders bevorzugt ist die Verdrehung der Abreisswalzen-Kurvenscheibe über die Hülse in Schritten von 9° oder 18° gegenüber der Abreisswalzen-Hilfswelle vorgesehen.

Weiter betrifft die Erfindung eine Kämmmaschine mit einem Getriebe.

Weitere Vorteile der Erfindung sind anhand eines nachfolgend beschriebenen und gezeigten Ausführungsbeispiels zu entnehmen.

Es zeigen:
- Fig. 1: einen Querschnitt durch eine Kämmmaschine;
- Fig. 2: eine Kombination von drei Getriebe-Modulen mit einem gemeinsamen Antriebsmotor;
- Fig. 3: eine schematische Darstellung einer Abreisswalzen-Kurvenscheiben-Vorrichtung;
- Fig. 4: eine graphische Darstellung einer Abreisswalzen-Bewegung;
- Fig. 5: eine schematische Darstellung einer Zangen-Kurvenscheiben-Vorrichtung;
- Fig. 6: eine graphische Darstellung einer Zangen-Bewegung;
- Fig. 7: eine graphische Darstellung der Abreisswalzen-Bewegung gemäss Fig. 4 und der Zangen-Bewegung gemäss Fig. 6 sowie phasenverschobene Abreisswalzen-Bewegungen;
- Fig. 8: eine schematische Veranschaulichung der Enden eines Faservlieses an den Abreisswalzen in Abhängigkeit der phasenverschobenen Abreisswalzen-Bewegung;
- Fig. 9: eine erfindungsgemässe Trennvorrichtung zur Phasenverschiebung der Abreisswalzen-Bewegung;
- Fig. 10: eine Einstellvorrichtung zur manuellen Verdrehung einer Abreisswalzen-Kurvenscheibe gegenüber einer Abreisswalzen-Hilfswelle mittels einer Hülse;
- Fig. 11: eine vergrösserte Darstellung der Einstellvorrichtung gemäss Fig. 10;
- Fig. 12: eine vergrösserte Darstellung einer alternativen Ausführung einer Eistellvorrichtung.

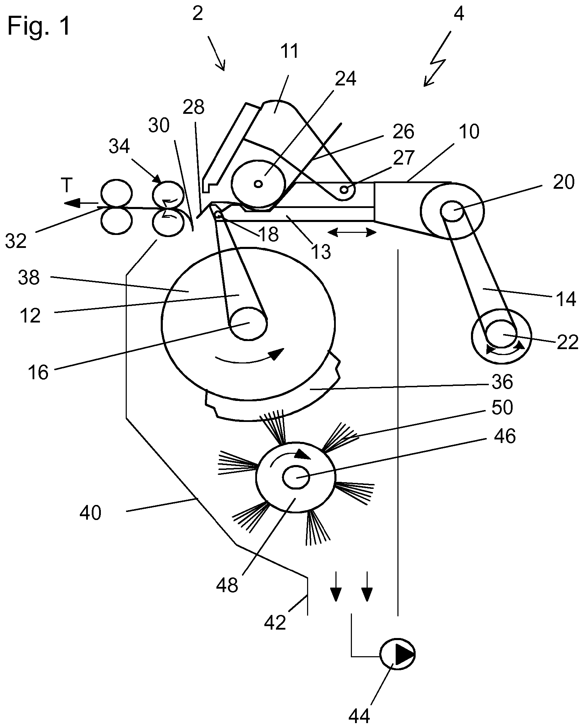

Fig. 1 zeigt schematisch einen Querschnitt einer Kämmstelle 2 einer Kämmmaschine 4. In der Praxis sind acht derartiger Kämmstellen 2 nebeneinander angeordnet. Jede Kämmstelle 2 besteht aus einem Zangenaggregat 10 (kurz: Zange genannt), welches über Vorderschwingen 12 und Hinterschwingen 14 eine Hin- und Herbewegung der Zange 10 ausführt. Die Vorderschwingen 12 (nur eine gezeigt) sind drehbeweglich auf einer Rundkamm-Welle 16 und an einer vorderen Zangenachse 18 der Zange 10 gelagert. Die Hinterschwinge 14, welche drehbeweglich an einer hinteren Zangenachse 20 der Zange 10 gelagert ist, ist drehfest mit einer angetriebenen Zangenwelle 22 verbunden. Einem Speisezylinder 24, der drehbeweglich innerhalb der Zange 10 gelagert ist, wird eine Watte 26 zugeführt. Die Watte 26 wird von einem nicht gezeigten Wattewickel abgewickelt, welcher auf ebenfalls nicht gezeigten Wickelwalzen für den Abrollvorgang aufliegt.

In der in Fig. 1 gezeigten Stellung ist die Zange 10 geöffnet, d.h. eine Oberzange 11 ist gegenüber einer Unterzange 13 über eine Oberzangenwelle 27 schwenkbar gelagert und somit von der Unterzange 13 abgehoben und die Zange 10 befindet sich in einer vorderen Position, in welcher der aus der Zange 10 herausragende Faserbart 28 an ein Faserende 30 eines bereits gebildeten Faservlieses 32 angesetzt und mit diesem verlötet wird. Das Faservlies 32 wird dabei von einem Abreisswalzenpaar 34 gehalten, welches für den Löt- und Abreissvorgang eine mit den Pfeilen gekennzeichnete Drehbewegung ausführen und damit das Faservlies 32, bzw. dessen Faserende 30 in Transportrichtung T bewegt.

In einer hinteren nicht gezeigten Endlage der Zange 10 ist diese geschlossen, wobei der aus der Zange 10 herausragende Faserbart 28 von einem Kämmsegment 36, bzw. von einer Kämmgarnitur eines drehbar gelagerten Rundkammes 38 ausgekämmt wird. Das Kämmsegment 36 befindet sich während des Kämmvorganges in einer oberen Stellung. Das Kämmsegment 36 ist üblicherweise mit Garniturzähnen versehen, welche während dem Kämmvorgang in den Faserbart 28 eingreifen.

Der Rundkamm 38, welcher drehbar über die Rundkamm-Welle 16 im Maschinengestell gelagert ist, befindet sich innerhalb eines im Wesentlichen rund um geschlossenen Absaugschachtes 40, welcher in einen Kanal 42 mündet. Der Kanal 42 ist, wie schematisch gezeigt, mit einer Unterdruckquelle 44 in Verbindung, mittels welcher das abgeschiedene Gut einer nicht dargestellten Sammelstelle zugeführt wird.

Bei dem abgeschiedenen Gut handelt es sich um Kurzfasern, Schalenteile, und sonstige Verunreinigungen, welche beim Kämmvorgang durch das Kämmsegment 36 aus dem Faserbart 28 ausgekämmt werden. Ein Teil des ausgekämmten Gutes wird durch den angelegten Unterdruck über die Unterdruckquelle 44 und die daraus entstehende Luftströmung direkt zum Kanal 42 überführt. Der übrige Teil, insbesondere die ausgekämmten Fasern verbleibt im Kämmsegment 36, bzw. setzt sich zwischen den Garniturzähnen ab und wird durch die Drehbewegung des Rundkammes 38 nach unten in die in Fig. 1 gezeigte Stellung befördert. Dabei gelangt das Kämmsegment 36 in den Wirkungsbereich einer ebenfalls im Absaugschacht 40 über eine Bürsten-Welle 46 drehbar gelagerte Bürste 48, welche auf ihrem Umfang mit verteilt angeordneten Borsten 50 ausgestattet ist.

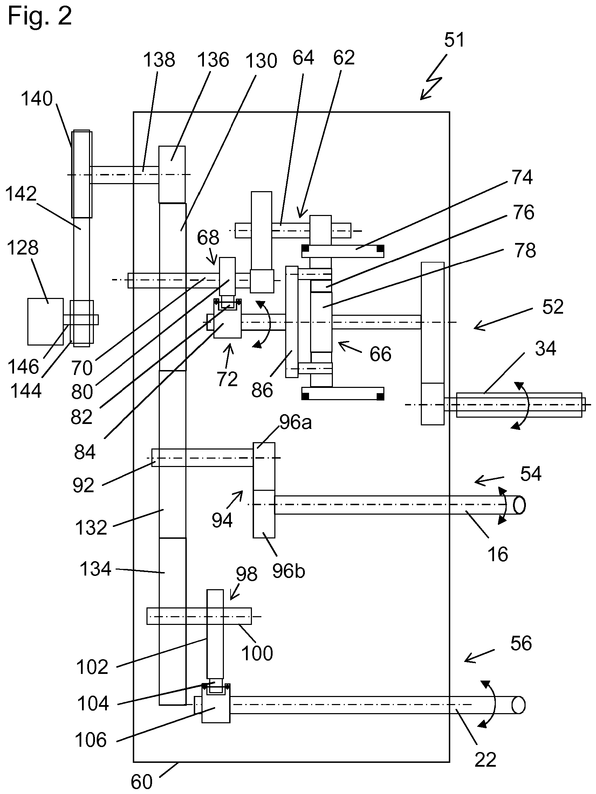

In Fig. 2 ist eine Kombination 51 aus einem ersten Getriebe 52 zur Erzeugung einer Pilgerschrittbewegung für die Abreisswalzen 34 (siehe Fig. 1), einem zweiten Getriebe 54 zum ungleichförmigen Antreiben des Rundkamms 38 (siehe Fig. 1) und einem dritten Getriebe 56 zur Hin- und Herbewegung der Zange 10 (siehe Fig. 1) vorgesehen. Die drei Getriebe 52, 54, 56 sind in einer Modul-Bauweise vorgesehen, wobei die Kombination 51 der drei Getriebe-Module 52, 54, 56 von einem Gehäuse 60 umschlossen ist.

Das erste Getriebe-Modul 52 weist einen ersten Antriebsstrang 62 mit einer ersten Antriebswelle 64 auf, welche über ein Differentialgetriebe 66 eine kontinuierliche Drehbewegung auf ein Hohlrad 74 überträgt. Das Getriebe-Modul 52 weist zudem einen zweiten Antriebsstrang 68 mit einer Abreisswalzen-Hilfswelle 70 auf, auf welcher eine Abreisswalzen-Kurvenscheiben-Vorrichtung 72 zur Erzeugung einer Vor- und Zurückbewegung angeordnet ist.

Das Differentialgetriebe 66 ist als Planetengetriebe ausgebildet, wobei der erste Antriebsstrang 62 über ein Hohlrad 74 in Verbindung mit Planentenrädern 76 ein Sonnenrad 78 antreibt, um die kontinuierliche Drehbewegung des Differentialgetriebes 66 auf die Abreisswalzen 34 zu übertragen. Unabhängig davon ist die Vor- und Zurückbewegung durch die Abreisswalzen-Kurvenscheiben-Vorrichtung 72 ausgebildet, wobei die Abreisswalzen-Kurvenscheiben-Vorrichtung 72 zwei auf der Abreisswalzen-Hilfswelle 70 drehfest angeordnete Abreisswalzen-Kurvenscheiben 80 aufweist, die in Wechselwirkung mit zwei Abreisswalzen-Kurvenrollen 82 zusammenwirken. Die beiden Abreisswalzen-Kurvenrollen 82 sind über einen Abreisswalzen-Kipphebel 84 mit einem Planententräger 86 des Differentialgetriebes 66 verbunden, so dass die Vor- und Zurückbewegung der Abreisswalzen-Kurvenscheiben 80 über den Planetenträger 86 mit der kontinuierlichen Drehbewegung des Hohlrades 74 überlagert wird, um eine Pilgerschrittbewegung auf die Abreisswalzen 34 zu übertragen.

Das zweite Getriebe-Modul 54 weist eine Rundkamm-Hilfswelle 92 auf, die über eine Unrundzahnradstufe 94 aus zwei ineinandergreifenden Unrundzahnrädern 96a, 96b mit der Rundkammwelle 16 verbunden ist, wobei die Unrundzahnradstufe 94 eine kontinuierliche Drehbewegung der Rundkamm-Hilfswelle 92 in eine ungleichförmige Drehbewegung für die Rundkammwelle 16 umwandelt.

An dieser Stelle sei erwähnt, dass der Durchmesser der Rundkammwelle gemäss dem Stand der Technik bei 30 mm und 35 mm liegt. Durch Erhöhung der Kämmmaschinendrehzahl überlagern sich die Vielfachen der Eigenfrequenz mit der Kämmmaschinendrehzahl, so dass eine unerwünschte Resonanz der Rundkammwellen angeregt wird. Um dies zu verhindern wird vorgeschlagen, die Eigenfrequenz durch Versteifung der Rundkammwellen zu minimieren. Daher wird idealerweise vorgeschlagen, einen Rundkammwellen-Durchmesser von 35 mm bis 45 mm, bevorzugt von 40 mm, auszuwählen.

Das dritte Getriebe-Modul 56 ist für die Hin- und Herbewegung der Zange 10 mit einer Zangen-Kurvenscheiben-Vorrichtung 98 ausgebildet, wobei im Ausführungsbeispiel gemäss Fig. 2 die Zangen-Kurvenscheiben-Vorrichtung 98 zwei auf einer Zangen-Hilfswelle 100 drehfest angeordnete Zangen-Kurvenscheiben 102 (nur eins gezeigt) aufweist, die in Wechselwirkung mit zwei Zangen-Kurvenrollen 104 (nur eins gezeigt) zusammenwirken. Die beiden Zangen-Kurvenrollen 104 sind über einen Zangen-Kipphebel 106 mit der angetriebenen Zangenwelle 22 (siehe Fig. 1) verbunden, so dass das Bewegungsprofil, insbesondere die Hin- und Herbewegung der Zangen-Kurvenscheiben 102 auf die Zange 10 (siehe Fig. 1) übertragen wird.

Im Ausführungsbeispiel gemäss Fig. 2 ist die Kombination 51 von Getriebe-Modulen 52, 54, 56 durch einen gemeinsamen Motor 128 angesteuert. Auf der Abreisswalzen-Hilfswelle 70 des zweiten Antriebsstranges 68 sitzt drehfest ein Abreisswalzen-Antriebszahnrad 130, auf der Rundkamm-Hilfswelle 92 sitzt drehfest ein Rundkamm-Antriebszahnrad 132 und auf der Zangen-Hilfswelle 100 sitzt drehfest ein Zangen-Antriebszahnrad 134, wobei alle Antriebszahnräder 130, 132, 134 die gleiche Grösse aufweisen und miteinander in Eingriff stehen. Durch die Ausbildung der Antriebszahnräder 130, 132, 134 mit der gleichen Abmessung, wird über den gemeinsamen Motor 128 die gleiche Drehzahl auf alle Getriebe-Module übertragen. Ein Zwischenzahnrad 136, welches mit dem Abreisswalzen-Antriebszahnrad 130 in Eingriff steht, ist drehfest auf einer Motor-Hilfswelle 138 befestigt und die Motor-Hilfswelle 138 ist durch das Gehäuse 60 nach Aussen geführt und dort sitzt drehfest ein Motor-Zwischenzahnrad 140. Das Motor-Zwischenzahnrad 140 ist über einen Zahnriemen 142 mit einem Motor-Zahnrad 144 antriebsverbunden, wobei das Motor-Zahnrad 144 drehfest auf einer Motorwelle 146 des gemeinsamen Motors 128 befestigt ist.

Alternativ kann anstelle der Antriebszahnräder 130, 132, 134 ein Zahnriemenantrieb verwendet werden.

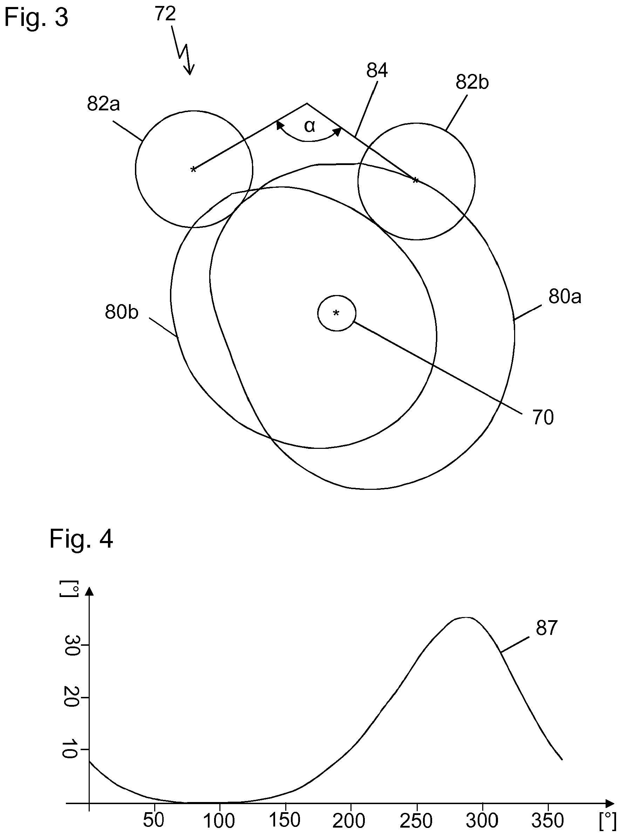

Auf einer Welle (z.B. 70, 92, 100) mit konstanter Kämmmaschinendrehzahl kann mindestens ein Sensor in Form eines Drehzahlgebers (inkremental mit Referenz oder absolut) ausserhalb des Gehäuses 60 angebracht sein. Gemäss Fig. 3 ist rein schematisch die Abreisswalzen-Kurvenscheiben-Vorrichtung 72 wie bereits im Zusammenhang mit Fig. 2 besprochen gezeigt. Auf der Abreisswalzen-Hilfswelle 70 sitzen drehfest zwei Abreisswalzen-Kurvenscheiben 80a, 80b. Der rein schematisch dargestellte Abreisswalzen-Kipphebel 84 weist zwei Abreisswalzen-Kurvenrollen 82a, 82b auf, die in einem Winkel α voneinander beabstandet sind, wobei die erste Abreisswalzen-Kurvenscheibe 80a mit der ersten Abreisswalzen-Kurvenrolle 82a und die zweite Abreisswalzen-Kurvenscheibe 80b mit der zweiten Abreisswalzen-Kurvenrolle 80b zusammen wirkt. Die zweite Abreisswalzen-Kurvenrolle 82b verhindert das Abheben der ersten Abreisswalzen-Kurvenrolle 82a von der ersten Abreisswalzen-Kurvenscheibe 80a. Die Abreisswalzen-Kurvenrollen 82a, 82b weisen einen Durchmesser von 90 mm auf und die Abreisswalzen-Kurvenscheiben 80a, 80b haben jeweils eine Scheibenbreite von 15 mm bis 30 mm, bevorzugt 20 mm. Die Lagerung der Abreisswalzen-Kurvenscheiben 80 kann entweder über Wälzlager oder Gleitlager erfolgen. Bei Verwendung von Wälzlagern liegen deren Durchmesser im Bereich von 90 mm bis 120 mm. Bei der Verwendung von Gleitlagern liegen deren Durchmesser bevorzugt im Breich von 60 mm bis 90 mm. Insebsondere bei geringen Platzverhältnissen wird vorzugsweise auf die Verwendung von Gleitlagern zugegriffen.

Die Abreisswalzen-Kurvenscheiben 80a, 80b haben jeweils einen spezifischen Aussenumfang, auf dem die jeweilige Abreisswalzen-Kurvenrolle 82a, 82b aufliegt. Durch die mechanische Verbindung der jeweiligen Kurven-Rolle 82a, 82b mit der Abreisswalzen-Hilfswelle 70, wird eine Vor- und Zurückbewegung 87 der Abreisswalzen-Kurvenscheibe 80 auf die Abreisswalzen 34 übertragen, wie im Zusammenhang mit Fig. 2 im Detail ausgeführt und in Fig. 4 rein schematisch gezeigt.

In Fig. 4 ist auf der Abszissenachse (horizontale X-Achse) eine einzige Umdrehung, also von 0° bis 360°, der Abreisswalzen-Kurvenscheibe 80 und auf der Ordinatenachse (vertikale Y-Achse) ein Kurvenscheiben-Auslenkwinkel von 0° bis 35° für die Abreisswalzen-Kurvenscheibe 80 dargestellt. Die durchgezogene Linie ist das Vor- und Zurückbewegungsprofil 87 wie im Zusammenhang mit Fig. 2 und Fig. 3 erläutert. Von 0° bis etwa 60° ist ein negativer Bewegungsverlauf vorgesehen, zwischen etwa 60° und 110° gibt es keine Änderung des Bewegungsverlaufs, von etwa 110° bis etwa 290° stellt sich ein positiver Bewegungsverlauf ein und von 290° bis 360° ist wieder ein negativer Bewegungsverlauf vorgesehen. Dieser Abreisswalzen-Bewegungsverlauf entspricht der Vor- und Zurückbewegung 87 für die Abreisswalzen, welche durch die Abreisswalzen-Kurvenscheiben-Vorrichtung 72 gemäss Fig. 3 hervorgerufen wird.

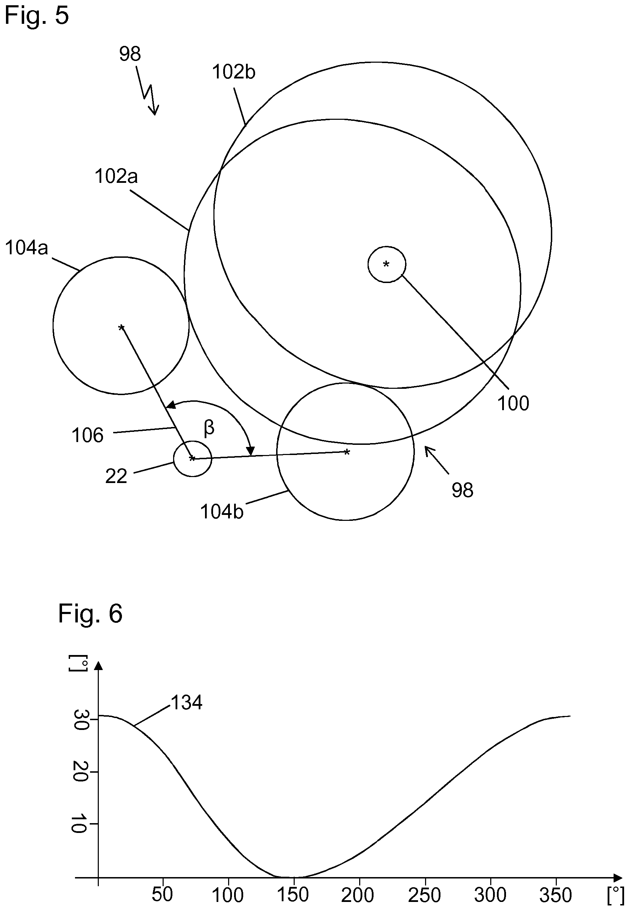

Gemäss Fig. 5 ist rein schematisch die Zangen-Kurvenscheiben-Vorrichtung 98 gezeigt. Auf der Zangen-Hilfswelle 100 sitzen drehfest zwei Zangen-Kurvenscheiben 102a, 102b.

Der rein schematisch dargestellte Zangen-Kipphebel 106 weist zwei Zangen-Kurvenrollen 104a, 104b auf, die in einem Winkel β voneinander beabstandet sind, wobei die erste Zangen-Kurvenscheibe 102a mit der ersten Zangen-Kurvenrolle 104a und die zweite Zangen-Kurvenscheibe 102b mit der zweiten Zangen-Kurvenrolle 104b zusammen wirkt. Die zweite Zangen-Kurvenrolle 104b verhindert das Abheben der ersten Zangen-Kurvenrolle 104a von der ersten Zangen-Kurvenscheibe 102a. Die Zangen-Kurvenrollen 104a, 104b weisen einen Durchmesser von 90 mm auf und die Zangen-Kurvenscheiben 102a, 102b haben jeweils eine Scheibenbreite von 15 mm bis 30 mm, bevorzugt 20 mm. Die Lagerung der Zangen-Kurvenscheiben 102 kann entweder über Wälzlager oder Gleitlager erfolgen. Bei Verwendung von Wälzlagern liegen deren Durchmesser im Bereich von 90 mm bis 120 mm. Bei der Verwendung von Gleitlagern liegen deren Durchmesser bevorzugt im Breich von 60 mm bis 90 mm. Insebsondere bei geringen Platzverhältnissen wird vorzugsweise auf die Verwendung von Gleitlagern zugegriffen.

Die Zangen-Kurvenscheiben 102a, 102b haben jeweils einen spezifischen Aussenumfang, auf dem die Zangen-Kurvenrollen 104a, 104b aufliegen. Durch die mechanische Verbindung der Zangen-Kurvenrollen 104a, 104b mit der Zangenwelle 22, wird ein Zangen-Bewegungsprofil 134 der Zangen-Kurvenscheiben 102 auf die angetriebene Zangenwelle 22 übertragen, wie im Zusammenhang mit Fig. 2 im Detail ausgeführt und in Fig. 6 rein schematisch gezeigt.

In Fig. 6 ist auf der Abszissenachse (horizontale X-Achse) eine einzige Umdrehung, also von 0° bis 360°, der Zangen-Kurvenscheibe 102 und auf der Ordinatenachse (vertikale Y-Achse) ein Kurvenscheiben-Auslenkwinkel von 0° bis 35° für die Zange-Kurvenscheibe 102 dargestellt. Bei etwa 150° ist wie in Fig. 1 beschrieben die Zange 10 in der vorderen Stellung und die Oberzange 11 sitzt auf der Unterzange 13 und ist geschlossen. Bei 0° und bei 360° ist die Zange 10 in der hinteren Stellung mit einem Zangen-Auslenkwinkel von etwa 31°.

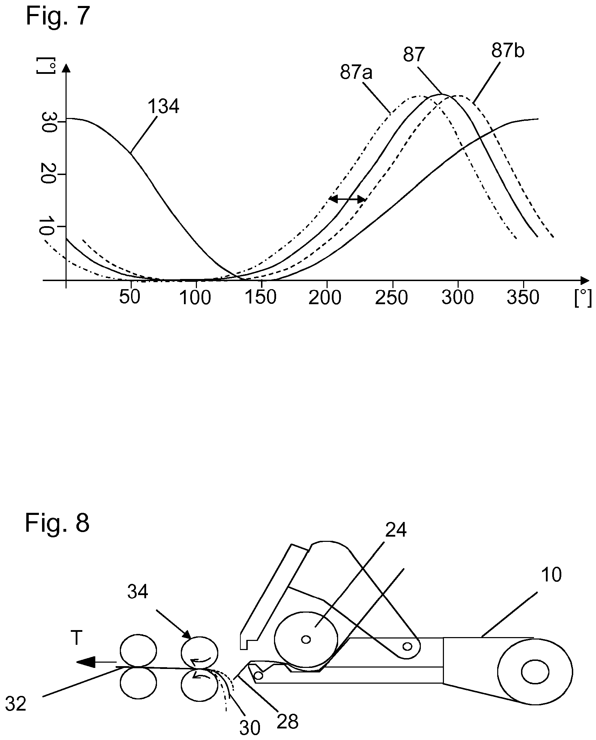

In Fig. 7 sind die Vor- und Zurückbewegung 87 gemäss Fig. 4 und die Zangen-Bewegung 134 gemäss Fig. 6 übereinander gelegt. Durch eine Phasenverschiebung der Vor- und Zurückbewegung 87 ausgehend vom Zustand gemäss Fig. 4, wie in Fig. 7 mit einem Doppelpfeil darstellt, kann der optimale Zeitpunkt ermittelt werden, wann die Abreisswalzen 34 das Faservlies 32 in Richtung der Zange 10 zurück (Pilgerschritt) bewegen, um den Lötvorgang mit dem ausgekämmten Faserbart 28, wie in Fig. 1 beschrieben auszuführen. Dieser Sachverhalt hat den Vorteil, dass zwischen den einzelnen Faserpaketen weniger Masseschwankungen und weniger Schnittigkeit für das gebildete Faservlies 32 auftreten und beim Lötvorgang liegen weniger umgelegte Faserspitzen vor.

In Fig. 8 ist vergrössert die Zange 10 und nachgeschaltet das Abreisswalzenpaar 34 gemäss Fig. 1 gezeigt, wobei in bekannter Art und Weise das ausgekämmte Faserbart 28 über den Speisezylinder 24 dem Abreisswalzenpaar 34 zugeführt wird, um den Lötvorgang mit dem Ende 30 des bereits gebildeten Faservlieses 32 durch die Abreisswalzen-Bewegung 87 wie in Fig. 2 beschrieben und in Fig. 7 schematisch dargestellt auszuführen. Das Abreisswalzenpaar 34 führt für den Abreissvorgang und den Lötvorgang bei der Kämmmaschine die sogenannte Pilgerschrittbewegung durch, d.h., vor einem weiteren Abreissvorgang wird das bereits gebildete Faservlies 32 um einen Schritt in Richtung der Zange 10 zurückbefördert, um das stirnseitig vom Abreisswalzenpaar 34 hervorstehende Ende 30 mit dem ausgekämmten Faserende 28 zu verbinden und dann wird das Faservlies 32 wieder um zwei Schritte in Förderrichtung T vorwärts bewegt. Mit Bezug auf Fig. 7 kann durch die Phasenverschiebung der Abreisswalzen-Bewegung 87 dem ausgekämmten Faserbart 28 ein kürzeres Ende (gestrichelte Linie) des Faservlieses oder ein längeres Ende (strichpunktierte Linie) des Faservlieses für den Lötvorgang vorgelegt werden. Entsprechend kann der Überlappungsbereich zwischen dem freien Ende des Faservlieses 30 am stirnseitigen Ende der Abreisswalzen 34 und dem ausgekämmten Faserbart 28 optimal auf die jeweilig vorgelegte Faserlänge eingestellt werden, wodurch, wie oben bereits ausgeführt, die Faserpakete im Faservlies 32 weniger Masseschwankungen aufweisen.

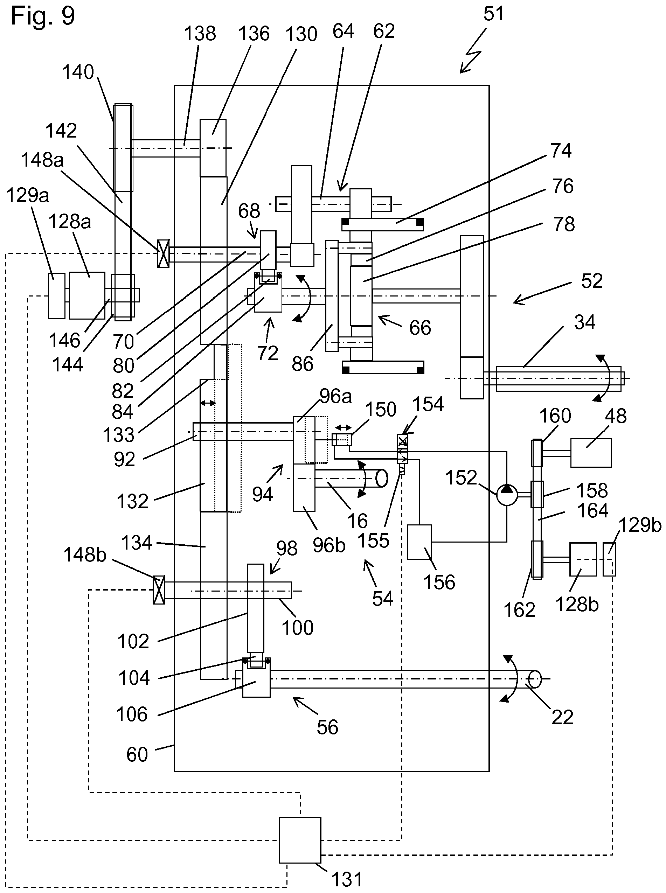

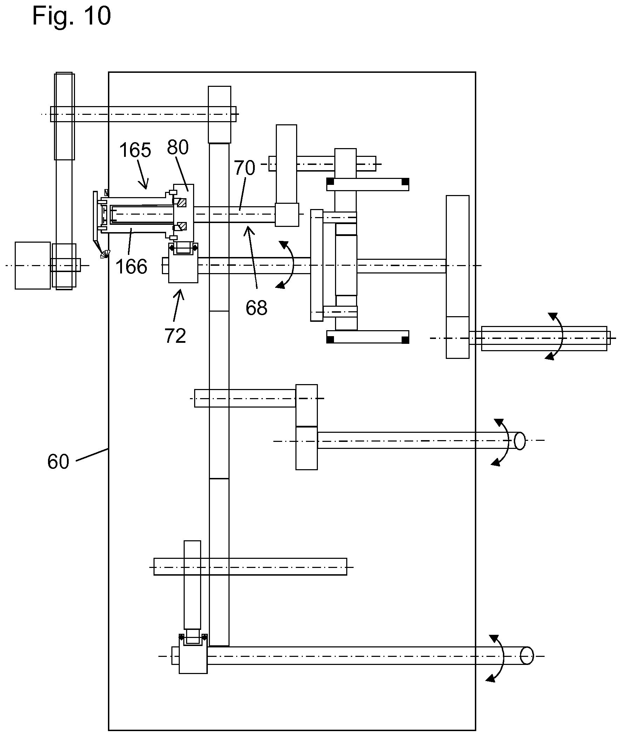

Eine technische Umsetzung zur Phasenverschiebung der Vor- und Zurückbewegung 87 erfolgt entweder über eine Trennvorrichtung wie in Fig. 9 beschrieben oder manuelle über eine Hülse wie in Fig. 10 beschrieben.

Wie aus Fig. 9 erkennbar, ist im Unterschied zu Fig. 2, die Abreisswalzen-Hilfswelle 70 des zweiten Antriebsstranges 68 durch das Gehäuse 60 nach Aussen geführt und weist ausserhalb des Gehäuses 60 an einem stirnseitigen Ende der Abreisswalzen-Hilfswelle 70 einen ersten Drehwinkelsensor 148a auf. Auch die Zangen-Hilfswelle 100 ist durch das Gehäuse 60 nach Aussen geführt und weist ausserhalb des Gehäuses 60 an einem stirnseitigen Ende der Zangen-Hilfswelle 100 einen zweiten Drehwinkelsensor 148b auf. Der gemeinsame Motor 128a ist über einen ersten Frequenzumrichter 129a angesteuert und der Frequenzumrichter 129a sowie die beiden Drehwinkelsensoren 148a, 148b sind mit einer Steuereinheit 131 verbunden.

In Fig. 9 ist weiter zu erkennen, dass das Rundkamm-Antriebszahnrad 134 in einem dem Abreisswalzen-Antriebszahnrad 130 zugewandten Endbereich eine Stufe 133 aufweist, so dass lediglich ein Teilbereich der stirnseitigen Aussenfläche des Abreisswalzen-Antriebszahnrades 130 mit dem Rundkamm-Antriebszahnrad 132 zusammenwirkt, während das Rundkamm-Antriebszahnrad 132 mit dem Zangen-Antriebszahnrad 134 über die gesamte stirnseitige Aussenfläche zusammenwirkt.

Um die Abreisswalzen-Kurvenscheiben-Vorrichtung 72 gegenüber der Zangen-Kurvenscheiben-Vorrichtung 98 zu verdrehen, wird über eine Vorrichtung eine Trennung der Wirkverbindung zwischen dem Abreisswalzen-Antriebszahnrad 130 und dem Zangen-Antriebszahnrad 132 durch eine Verschiebung des Zangen-Antriebszahnrades 132 in Richtung einer Längsachse der Rundkamm-Hilfswelle 92 vorgesehen. Die Verschiebung ist in Fig. 9 mit einem Doppelpfeil kenntlich gemacht. In vorliegender Ausführung erfolgt die Verschiebung des Zangen-Antriebszahnrades 132 mit Hilfe eines Hydraulikzylinders 150. Der Hydraulikzylinder 150 ist über ein Wegeventil 154 aus zwei Durchflusswegen mit einer Hydraulikpumpe 152 und einem Reservoir 156 verbunden. Die Steuereinheit 131 regelt über einen Ventilregler 155 die beiden Durchflusswege des Wegeventils 154 für das Reservoir 156 und die Hydraulikpumpe 152. Die Hydraulikpumpe 152 ist mit einem Pumpen-Antriebszahnrad 158 verbunden, wobei das Pumpen-Antriebszahnrad 158 mit einem Bürsten-Antriebszahnrad 160 und einem Motor-Antriebszahnrad 162 über eine Riemen 164 in Wirkverbindung steht. Ein zweiter Frequenzumrichter 129b ist mit einem zweiten Motor 128b verbunden und treibt so die Hydraulikpumpe 152 und die Bürste 48 an. Der zweite Frequenzumrichter 129b und der Ventilregler 155 sind zusammen mit den beiden Drehwinkelsensoren 148a, 148b und dem ersten Frequenzumrichter 129a mit der Steuereinheit 131 verbunden.

Die Funktionsweise der vorliegenden erfindungsgemässen Trennung der Wirkverbindung zwischen der Abreisswalzen-Kurvenscheiben-Vorrichtung 72 und der Zangen-Kurvenscheiben-Vorrichtung 98 erfolgt derart, dass die Steuereinheit 131 die Hydraulikpumpe 152 und den Ventilregler 155 aktiviert, so dass das Reservoir 156 den Hydraulikzylinder 150 bewegt und dieser das erste Unrundzahnrad 96a zusammen mit der Rundkamm-Hilfswelle 92, auf der das Rundkamm-Antriebszahnrad 132 drehfest sitzt, in Richtung der Längsachse der Rundkamm-Hilfswelle 92 verschiebt, so dass das Rundkamm-Antriebszahnrad 132 nicht mehr mit dem Abreisswalzen-Antriebszahnrad 130 in Eingriff steht, aber weiterhin mit dem Zangen-Antriebszahnrad 134. Somit ist die Abreisswalzen-Kurvenscheiben-Vorrichtung 72 vom zweiten Getriebe-Modul 54 und dritten Getriebe-Modul 56 entkoppelt und kann verdreht werden. Die Verdrehung der Abreisswalzen-Kurvenscheiben-Vorrichtung 72 erfolgt über den ersten Frequenzumrichter 129a in Verbindung mit dem gemeinsamen Motor 128a, in der Weise, dass die Abreisswalzen-Hilfswelle 70 in Schritten von 0,9° bis 4,5° verdreht wird. Der erste Drehwinkelsensor 148a ist dazu da, den Drehwinkelzustand der Abreisswalzen-Hilfswelle 70 zu erfassen und mit dem unveränderten Drehwinkelzustand der Zangen-Hilfswelle 100 zu vergleichen. Bei Verdrehung der Abreisswalzen-Hilfswelle 70 vergleicht die Steuereinheit 131 die Werte des ersten Drehwinkelsensors 148a mit den unveränderten Werten des zweiten Drehwinkelsensors 148b und kann so bestimmen, um wieviel Grad die Verdrehung mit dem gemeinsamen Motor 128a erfolgt ist. Erst wenn die gewünschte Verdrehung mit dem gemeinsamen Motor 128a eingestellt ist, gibt die Steuereinheit 131 wieder ein Signal an den zweiten Frequenzumrichter 129b und den Ventilregler 155, um den Hydraulikzylinder 150 zu aktivieren, so dass das Rundkamm-Antriebszahnrad 132 wieder mit dem Abreisswalzen-Antriebszahnrad 130 in Eingriff steht. Im Ergebnis ist die Abreisswalzen-Bewegung 87 nun gegenüber der Zangen-Bewegung 134 zeitlich verschoben, wie bereits im Zusammenhang mit Fig. 7 und Fig. 8 erläutert.

Wie aus Fig. 10 erkennbar, ist im Unterschied zu Fig. 2, die Abreisswalzen-Hilfswelle 70 des zweiten Antriebsstranges 68 mit einer Einstellvorrichtung 165 versehen. Die Einstellvorrichtung 165 weist eine Hülse 166 auf, welche auf der Abreisswalzen-Hilfswelle 70 drehfest angebracht und mit der Abreisswalzen-Hilfswelle 70 lösbar verbunden ist. Die Hülse 166 ist mit der Abreisswalzen-Kurvenscheibe 80 über eine Schleppmitnahme verbunden. Die Einstellvorrichtung 165 ist ausserhalb des Gehäuses 60 angeordnet.

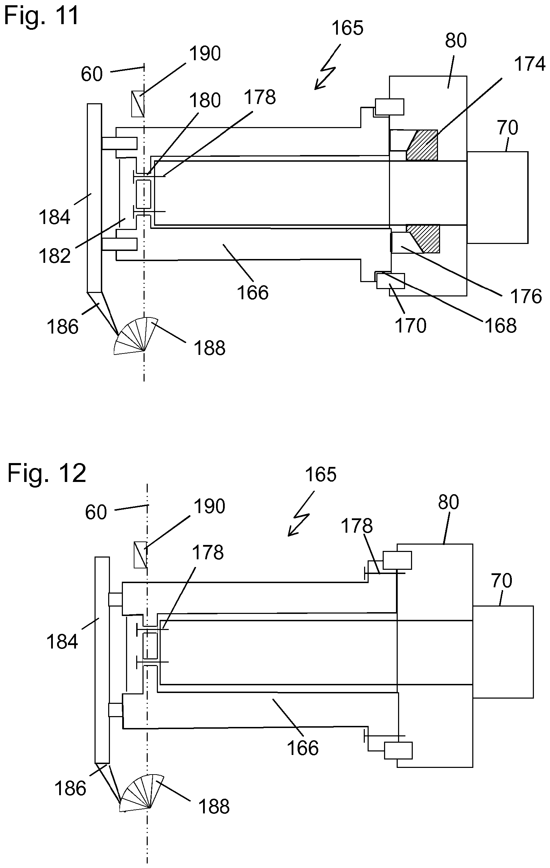

In Fig. 11 ist eine vergrösserte Darstellung der Einstellvorrichtung 165 gemäss Fig. 10 gezeigt. Das Gehäuse 60 ist lediglich durch die strichpunktierte Linie vereinfacht dargestellt. Für die Schleppmitnahme der Hülse 166 mit der Abreisswalzen-Kurvenscheibe 80 ist ein der Abreisswalzen-Kurvenscheibe 80 zugewandtes Ende der Hülse 166 als ringförmiger Absatz ausgebildet, worin radial aussen eine Vielzahl Aufnahmen 168 eingebracht sind. Die Abreisswalzen-Kurvenscheibe 80 weist eingesetzte Zapfen 170 auf, die mit den Aufnahmen 168 zusammenwirken.

Die Abreisswalzen-Kurvenscheibe 80 ist mit der Abreisswalzen-Hilfswelle 70 über ein Federelementpacket 174 gekoppelt, wobei eine Klemmwirkung entsteht, wenn die Hülse 166 über die Abreisswalzen-Hilfswelle 70 in axialer Richtung gespannt ist, indem ein an der Hülse 166 vorstehender Dorn 176 das in der Abreisswalzen-Kurvenscheibe 80 eingesetzte Federelementpacket 174 derart in eine Querstellung verlagert, so dass über das Federelementpacket 174 die Abreisswalzen-Kurvenscheibe 80 gegen die Abreisswalzen-Hilfswelle 70 drückt. Die Hülse 166 ist mit Schraubverbindungen 178 mit der Abreisswalzen-Hilfswelle 70 verbunden, wobei ein der Abreisswalzen-Kurvenscheibe 80 abgewandtes Ende der Hülse 166 sacklochartige Löcher 180 aufweist, wodurch die Schraubverbindungen 178 hindurchgreifen.

Am der Abreisswalzen-Kurvenscheibe 80 abgewandten Ende der Hülse 166 ist eine ringförmige Aufnahme 182 ausgebildet, an der eine Verstellscheibe 184 lösbar angeordnet ist. Dies bewirkt ein Verdecken der Schraubverbindungen 178, welche in die sacklochartigen Löcher 180 eingedreht sind. Die Verstellscheibe 184 weist am Umfang einen Zeiger 186 auf, der dazu dient, die Position der Abreisswalzen-Kurvenscheibe 80 gegenüber der Abreisswalzen-Hilfswelle 70 mittels einer am Gehäuse 60 angebrachten Skala 188 anzuzeigen.

Zur Überwachung der Anwesenheit der Verstellscheibe 184 auf der Hülse 166 ist am Gehäuse 60 ein Sensor 190, vorzugsweise ein Reed-Kontakt-Sensor, vorgesehen. Dieser ist mit einer nicht dargestellten Steuereinheit verbunden und gibt somit dem Betreiber der Kämmmaschine an, ob die Verstellscheibe 184 nach der Einstellung entfernt wurde

In Fig. 12 ist eine alternative Ausführung der Einstellvorrichtung 165 gezeigt, wobei die Hülse 166 mit der Abreisswalzen-Kurvenscheibe 80 über Schraubverbindungen 178 verbunden ist. Die Schleppmitnahme der Hülse 166 mit der Abreisswalzen-Kurvenscheibe 80 und die Befestigung der Hülse 166 an der Abreisswalzen-Hilfswelle 70 sind in gleicher Art und Weise, wie bereits im Zusammenhang mit Fig. 11 erläutert, ausgeführt. Auch die Montage der Verstellscheibe 184 an der Hülse 166 und der Zeiger 186 am Umfang der Verstellscheibe 184 für die Angabe der Verdrehung der Abreisswalzen-Kurvenscheibe 80 gegenüber der Abreisswalzen-Hilfswelle 70 über die Skala 188 sind gleich ausgebildet. Ebenso ist der Sensor 190 am Gehäuse 60 angeordnet, um das Vorhandensein der Verstellscheibe 184 zu erfassen.

Alternativ kann die Abreisswalzen-Kurvenscheibe 80 mit Hilfe eines hydraulischen Spannsatzes an der Abreisswalzen-Hilfswelle 70 lösbar befestigt sein. Hierzu könnte beispielsweise eine Schrumpfscheibe vom Typ HYD von der Firma STÜWE zum Einsatz kommen. In diesem Zusammenhang weist die Schrumpfscheibe HYD eine Drucckammer auf, worin über eine Hydraulikpumpe ein Hydrauliköl eingebracht werden kann, um ein Spannen bzw. Lösen der Schrumpfscheibe zwischen der Abreisswalzen-Kurvenscheibe und der Abreisswalzen-Hilfswelle zu ermöglichen.

### Legende

- 2: Kämmstelle
- 4: Kämmmaschine
- 10: Zangenaggregat (kurz Zange)
- 11: Oberzange
- 12: Vorderschwinge
- 13: Unterzange
- 14: Hinterschwinge
- 16: Rundkammwelle
- 18: Vordere Zangenwelle
- 20: Hintere Zangenwelle
- 22: Angetriebene Zangenwelle
- 24: Speisezylinder
- 26: Watte
- 27: Oberzangenwelle
- 28: Faserbart
- 30: Faserende
- 32: Faservlies
- 34: Abreisswalzenpaar
- 36: Kämmsegment
- 38: Rundkamm
- 40: Absaugschacht
- 42: Kanal
- 44: Unterdruckquelle
- 46: Bürstenwelle
- 48: Bürste
- 50: Borsten
- 51: Kombination von Getriebe-Modulen
- 52: Erstes Getriebe-Modul
- 54: Zweites Getriebe-Modul
- 56: Drittes Getriebe-Modul
- 58: Viertes Getriebe-Modul
- 60: Gehäuse
- 62: Erster Antriebsstrang
- 64: Erste Antriebswelle
- 66: Differentialgetriebe (Planentengetriebe)
- 68: Zweiter Antriebsstrang
- 70: Abreisswalzen-Hilfswelle
- 72: Abreisswalzen-Kurvenscheiben-Vorrichtung
- 74: Hohlrad
- 76: Planetenrad
- 78: Sonnenrad
- 80: Abreisswalzen-Kurvenscheibe
- 82: Abreisswalzen-Kurvenrolle
- 84: Abreisswalzen-Kipphebel
- 86: Planetenträger
- 87: Vor- und Zurückbewegung
- 92: Rundkamm-Hilfswelle
- 94: Rundkamm-Differentialgetriebe
- 96: Unrundzahnrad
- 98: Zangen-Kurvenscheiben-Vorrichtung
- 100: Zangen-Hilfswelle
- 102: Zangen-Kurvenscheibe
- 104: Zangen-Kurvenrolle
- 106: Zangen-Kipphebel
- 128: Gemeinsamer Motor, Antriebsmotor
- 129: Frequenzumrichter
- 130: Abreisswalzen-Antriebszahnrad
- 131: Steuereinheit
- 132: Rundkamm-Antriebszahnrad
- 133: Stufe
- 134: Zangen-Antriebszahnrad
- 136: Zwischen-Zahnrad
- 138: Motor-Hilfswelle
- 140: Motor-Zwischenzahnrad
- 142: Zahnriemen
- 144: Motor-Zahnrad
- 146: Motorwelle
- 148: Drehwinkelsensor
- 150: Hydraulikzylinder
- 152: Hydraulikpumpe
- 154: Wegeventil
- 155: Ventilregler
- 156: Reservoir
- 158: Pumpen-Antriebszahnrad
- 160: Bürsten-Antriebszahnrad
- 162: Motor-Antriebszahnrad
- 164: Riemen
- 165: Einstellvorrichtung
- 166: Hülse
- 168: Aufnahme
- 170: Zapfen
- 174: Federelementpacket
- 176: Dorn
- 178: Schraubverbindungen
- 180: sacklochartige Löcher
- 182: ringförmige Aufnahme
- 184: Verstellscheibe
- 186: Zeiger
- 188: Skala
- 190: Sensor

## Patentansprüche

1. Getriebe für eine Pilgerschrittbewegung von Abreisswalzen (34) einer Kämmmaschine (4), mit einem Gehäuse (60), einer Abreisswalzen-Kurvenscheibe (80) und einer Abreisswalzen-Hilfswelle (70) zur Übertragung einer Vor- und Zurückbewegung auf die Abreisswalzen (34), **gekennzeichnet dadurch** eine Einstellvorrichtung (165) zur Verstellung der Abreisswalzen-Kurvenscheibe (80) gegenüber der Abreisswalzen-Hilfswelle (70) vorgesehen ist, wobei die Einstellvorrichtung (165) eine Hülse (166) aufweist, welche auf der Abreisswalzen-Hilfswelle (70) drehfest angebracht und mit der Abreisswalzen-Hilfswelle (70) lösbar verbunden ist, wobei die Hülse (166) mit der Abreisswalzen-Kurvenscheibe (80) über eine Schleppmitnahme verbunden ist.

2. Getriebe nach Anspruch 1, **dadurch gekennzeichnet, dass** die Einstellvorrichtung (165) ausserhalb des Gehäuses (60) angeordnet ist.

3. Getriebe nach Anspruch 1 oder 2, **dadurch gekennzeichnet, dass** für die Schleppmitnahme ein der Abreisswalzen-Kurvenscheibe (80) zugewandtes Ende der Hülse (166) als ringförmiger Absatz ausgebildet ist, worin radial aussen eine Vielzahl Aufnahmen (168) eingebracht sind, die mit in der Abreisswalzen-Kurvenscheibe (80) eingesetzten Zapfen (170) zusammenwirken.

4. Getriebe nach einem der Ansprüche 1 bis 3, **dadurch gekennzeichnet, dass** die Hülse (166) über Schraubverbindungen (178) mit der Abreisswalzen-Kurvenscheibe (80) verbunden ist.

5. Getriebe nach Anspruch 1, **dadurch gekennzeichnet, dass** die Abreisswalzen-Kurvenscheibe (80) mit der Abreisswalzen-Hilfswelle (70) über ein Federelement (174) gekoppelt ist, wobei eine Klemmwirkung entsteht, wenn die Hülse (166) an der Abreisswalzen-Hilfswelle (70) befestigt ist, indem ein an der Hülse (166) vorstehender Dorn (176) das in der Abreisswalzen-Kurvenscheibe (80) eingesetzte Federelement (174) derart in eine Querstellung verlagert, so dass über das Federelement (174) die Abreisswalzen-Kurvenscheibe (80) gegen die Abreisswalzen-Hilfswelle (70) drückt.

6. Getriebe nach einem der Ansprüche 1 bis 5, **dadurch gekennzeichnet, dass** die Hülse (166) über Schraubverbindungen (178) mit der Abreisswalzen-Hilfswelle (70) verbunden ist.

7. Getriebe nach Anspruch 6, **dadurch gekennzeichnet, dass** ein der Abreisswalzen-Kurvenscheibe (80) abgewandtes Ende der Hülse (166) sacklochartige Löcher (180) zur Montage der Hülse (166) an der Abreisswalzen-Hilfswelle (70) über Schraubverbindungen (178) aufweist.

8. Getriebe nach Anspruch 6 oder 7, **dadurch gekennzeichnet, dass** am der Abreisswalzen-Kurvenscheibe (80) abgewandten Ende der Hülse (166) eine ringförmige Aufnahme (182) ausgebildet ist, an der eine Verstellscheibe (184) lösbar angeordnet ist zur Verdeckung der Schraubverbindungen (178) im montierten Zustand und die Verstellscheibe (184) am Umfang einen Zeiger (186) aufweist zur Anzeige einer Position der Abreisswalzen-Kurvenscheibe (80) gegenüber der Abreisswalzen-Hilfswelle (70) mittels einer am Gehäuse (609 angebrachten Skala (188).

9. Getriebe nach Anspruch 8, **dadurch gekennzeichnet, dass** ein Sensor (190) am Gehäuse (60) zur Überwachung der Anwesenheit der Verstellscheibe (184) auf der Hülse (166) vorgesehen ist.

10. Getriebe nach einem der Ansprüche 1 bis 9, **dadurch gekennzeichnet, dass** die Verdrehung der Abreisswalzen-Kurvenscheibe (80) über die Hülse (166) in Schritten von 9° oder 18° gegenüber der Abreisswalzen-Hilfswelle (70) vorgesehen ist.

11. Kämmmaschine mit einem Getriebe für eine Pilgerschrittbewegung von Abreisswalzen einer Kämmmaschine nach einem der Ansprüche 1 bis 10.

## Claims

1. Gear mechanism for a pilger motion of tear-off rollers (34) of a combing machine (4), the gear mechanism comprising a housing (60), a tear-off roller cam disk (80) and a tear-off roller auxiliary shaft (70) for transmitting a forward and backward movement to the tear-off rollers (34), **characterized in that** an adjusting device (165) is provided for adjusting the tear-off roller cam disk (80) relative to the tear-off roller auxiliary shaft (70), wherein the adjusting device (165) has a sleeve (166) which is rotationally fixedly mounted on the tear-off roller auxiliary shaft (70) and is detachably connected to the tear-off roller auxiliary shaft (70), wherein the sleeve (166) is connected to the tear-off roller cam disk (80) by means of an entrainment means.

2. Gear mechanism according to claim 1, **characterized in that** the adjusting device (165) is arranged outside the housing (60).

3. Gear mechanism according to either claim 1 or claim 2, **characterized in that** for the entrainment means, an end of the sleeve (166) facing the tear-off roller cam disk (80) is designed as an annular shoulder, in which a plurality of receptacles (168) are introduced radially on the outside and cooperate with pins (170) inserted in the tear-off roller cam disk (80).

4. Gear mechanism according to any of claims 1 to 3, **characterized in that** the sleeve (166) is connected to the tear-off roller cam disk (80) via screw connections (178).

5. Gear mechanism according to claim 1, **characterized in that** the tear-off roller cam disk (80) is coupled to the tear-off roller auxiliary shaft (70) via a spring element (174), a clamping effect being produced when the sleeve (166) is fastened to the tear-off roller auxiliary shaft (70), **in that** a mandrel (176) protruding from the sleeve (166) moves the spring element (174) inserted in the tear-off roller cam disk (80) into a transverse position such that the tear-off roller cam disk (80) presses against the tear-off roller auxiliary shaft (70) via the spring element (174).

6. Gear mechanism according to any of claims 1 to 5, **characterized in that** the sleeve (166) is connected to the tear-off roller auxiliary shaft (70) via screw connections (178).

7. Gear mechanism according to claim 6, **characterized in that** an end of the sleeve (166) facing away from the tear-off roller cam disk (80) has blind holes (180) for mounting the sleeve (166) on the tear-off roller auxiliary shaft (70) via screw connections (178).

8. Gear mechanism according to either claim 6 or claim 7, **characterized in that** at the end of the sleeve (166) facing away from the tear-off roller cam disk (80), an annular receptacle (182) is formed, on which an adjusting disk (184) is detachably arranged to cover the screw connections (178) in the assembled state, and the adjusting disk (184) has a pointer (186) on the circumference for indicating a position of the tear-off roller cam disk (80) relative to the tear-off roller auxiliary shaft (70) by means of a scale (188) attached to the housing (609).

9. Gear mechanism according to claim 8, **characterized in that** a sensor (190) is provided on the housing (60) for monitoring the presence of the adjusting disk (184) on the sleeve (166).

10. Gear mechanism according to any of claims 1 to 9, **characterized in that** the rotation of the tear-off roller cam disk (80) by means of the sleeve (166) is provided in increments of 9° or 18° relative to the tear-off roller auxiliary shaft (70).

11. Combing machine comprising a gear for a pilger motion of tear-off rollers of a combing machine according to any of claims 1 to 10.

## Revendications

1. Transmission pour un mouvement à pas de pèlerin de rouleaux arracheurs (34) d'une peigneuse (4), comportant un carter (60), un disque à came (80) de rouleau arracheur et un arbre auxiliaire (70) de rouleau arracheur pour la transmission d'un mouvement d'avance et de recul aux rouleaux arracheurs (34), **caractérisée en ce qu'**un dispositif de réglage (165) est prévu pour le réglage du disque à came (80) de rouleau arracheur par rapport à l'arbre auxiliaire (70) de rouleau arracheur, dans lequel le dispositif de réglage (165) présente un manchon (166) qui est monté solidairement en rotation sur l'arbre auxiliaire (70) de rouleau arracheur et qui est relié de manière amovible à l'arbre auxiliaire (70) de rouleau arracheur, dans lequel le manchon (166) est relié au disque à came (80) de rouleau arracheur par un entraînement de traction.

2. Transmission selon la revendication 1, **caractérisée en ce que** le dispositif de réglage (165) est disposé à l'extérieur du carter (60).

3. Transmission selon la revendication 1 ou 2, **caractérisée en ce que**, pour l'entraînement de traction, une extrémité du manchon (166) tournée vers le disque à came (80) de rouleau arracheur est réalisée sous la forme d'un épaulement annulaire, dans lequel sont ménagés radialement à l'extérieur une pluralité de logements (168) qui coopèrent avec des tourillons (170) insérés dans le disque à came (80) de rouleau arracheur.

4. Transmission selon l'une des revendications 1 à 3, **caractérisée en ce que** le manchon (166) est relié au disque à came (80) de rouleau arracheur par des liaisons vissées (178).

5. Transmission selon la revendication 1, **caractérisée en ce que** le disque à came (80) de rouleau arracheur est accouplé à l'arbre auxiliaire (70) de rouleau arracheur par un élément à ressort (174), dans lequel un effet de serrage est produit lorsque le manchon (166) est fixé à l'arbre auxiliaire (70) de rouleau arracheur, **en ce qu'**un mandrin (176) faisant saillie sur le manchon (166) déplace l'élément à ressort (174) inséré dans le disque à came (80) de rouleau arracheur dans une position transversale de telle sorte que, par l'élément à ressort (174), le disque à came (80) de rouleau arracheur appuie contre l'arbre auxiliaire (70) de rouleau arracheur.

6. Transmission selon l'une des revendications 1 à 5, **caractérisée en ce que** le manchon (166) est relié à l'arbre auxiliaire (70) de rouleau arracheur par des liaisons vissées (178).

7. Transmission selon la revendication 6, **caractérisée en ce qu'**une extrémité du manchon (166) opposée au disque à came (80) de rouleau arracheur présente des trous (180) en forme de trou borgne pour le montage du manchon (166) sur l'arbre auxiliaire (70) de rouleau arracheur par des liaisons vissées (178).

8. Transmission selon la revendication 6 ou 7, **caractérisée en ce qu'**un logement annulaire (182) est formé à l'extrémité du manchon (166) opposée au disque à came (80) de rouleau arracheur, sur lequel logement une rondelle de réglage (184) est disposée de manière amovible pour le masquage des liaisons vissées (178) à l'état monté et la rondelle de réglage (184) présente sur la périphérie une aiguille (186) pour l'indication d'une position du disque à came (80) de rouleau arracheur par rapport à l'arbre auxiliaire (70) de rouleau arracheur à l'aide d'une échelle (188) appliquée sur le carter (609).

9. Transmission selon la revendication 8, **caractérisée en ce qu'**un capteur (190) est prévu sur le carter (60) pour la surveillance de la présence de la rondelle de réglage (184) sur le manchon (166).

10. Transmission selon l'une des revendications 1 à 9, **caractérisée en ce que** la rotation du disque à came (80) de rouleau arracheur par le manchon (166) est prévue par pas de 9° ou 18° par rapport à l'arbre auxiliaire (70) de rouleau arracheur.

11. Peigneuse comportant une transmission pour un mouvement à pas de pèlerin de rouleaux arracheurs d'une peigneuse selon l'une des revendications 1 à 10.
